**Europäisches Patentamt**

**European Patent Office**

**Office européen des brevets**

(19)

(11) Veröffentlichungsnummer : **0 327 896 B1**

(12)

# EUROPÄISCHE PATENTSCHRIFT

(45) Veröffentlichungstag der Patentschrift :
**20.05.92 Patentblatt 92/21**

(51) Int. Cl.$^5$ : **B01D 11/02, B09B 5/00**

(21) Anmeldenummer : **89101379.9**

(22) Anmeldetag : **27.01.89**

(54) **Verfahren zur Reinigung von Erd-Böden oder dergleichen, die mit extrahierbaren organischen Schadstoffen belastet sind.**

(30) Priorität : **06.02.88 DE 3803634**

(43) Veröffentlichungstag der Anmeldung :
**16.08.89 Patentblatt 89/33**

(45) Bekanntmachung des Hinweises auf die
Patenterteilung :
**20.05.92 Patentblatt 92/21**

(84) Benannte Vertragsstaaten :
**AT BE CH DE FR GB IT LI LU NL**

(56) Entgegenhaltungen :
**EP-A- 0 185 831**
**EP-A- 0 251 562**
**DE-A- 2 531 732**
**DE-A- 3 610 199**
**US-A- 4 336 136**
**US-A- 4 444 260**

(73) Patentinhaber : **LEONHARD WEISS GmbH & Co.**
**Brunnenstrasse 36**
**W-7180 Crailsheim (DE)**

(72) Erfinder : **Neumayr, Volker, Dr.**
**Krackerstrasse 61**
**W-7180 Crailsheim (DE)**
Erfinder : **Petersen, Volker**
**Beethovenstrasse 9**
**W-7180 Crailsheim (DE)**
Erfinder : **Rapp, Walter, Dr.**
**Erzbergerstrasse 22**
**W-7320 Göppingen (DE)**
Erfinder : **Schmidt, Fritz Joachim**
**Gustav-Adolf-Strasse 1**
**W-7320 Göppingen (DE)**

(74) Vertreter : **Pfusch, Volker, Dipl.-Ing.**
**Dinkelsbühler Strasse 12F**
**W-7000 Stuttgart 50 (DE)**

## Beschreibung

Die Erfindung betrifft ein Verfahren nach dem Oberbegriff des Anspruchs 1.

Reinigungen dieser Art sind erforderlich, wenn die Schadstoffe in den Bodenmaterialien festgelegte Grenzwerte übersteigen.

Bei den Schadstoffen kann es sich insbesondere um folgende Stoffgruppen handeln:

– Aliphaten, Mineralöle

– Aromaten, einschließlich Phenolen und Styrole

– Polycyclische aromatische Kohlenwasserstoffe (PAK)

– extrahierbare organische Halogenkohlenwasserstoffe

– freisetzbare Cyanide

Bekannte Reinigungsverfahren können physikalischer oder chemischer Art sein.

Bei den physikalischen Verfahren wird der Böden mit Wasser gewaschen. Dabei erfolgt das Waschen z.B. mit Hochdruckstrahlen oder Boden-Wasser-Suspensionen werden einer Vibration ausgesetzt. Vielfach werden dabei auch Detergentien eingesetzt.

Bei den Verfahren chemischer Art werden den Böden die organischen Schadstoffe extraktiv mit Hilfe von Lösemitteln entzogen.

Die beschriebenen physikalischen Verfahren haben den Nachteil, daß sich dem Waschvorgang eine aufwendige Prozeßwasseraufbereitung anschliessen muß. Mit diesem Prozeßwasser werden dem Boden Feinstteile unterhalb 0,1 mm Korndurchmesser, bestehend aus Schluff und Ton, entzogen. Diese Feinstanteile enthalten die Schadstoffe angereichert, weshalb sie mit hohem Aufwand separat entsorgt werden müssen. Da der Anteil dieser Fraktion teilweise über 30% der Böden ausmachen kann, sind diese Verfahren gegenüber anderen Entsorgungsmöglichkeiten wirtschaftlich äußerst unvorteilhaft. Weiterhin ist zu bedenken, daß Waschverfahren nur dann wirtschaftlich sinnvoll sind, wenn sie auf dem kontaminierten Gelände erfolgen und die Böden nach dem Reinigen wieder eingebaut werden können, damit Transportwege entfallen. Dem steht entgegen, daß Böden, die durch den Waschvorgang alle Feinstanteile verloren haben, ihre natürliche Filterwirkung gegenüber tieferen Schichten des Ökosystems eingebüßt haben. Sie müssen mit anderen Bodensorten abgedeckt, vermischt oder abtransportiert werden.

Bei der Durchführung der zu den chemischen Trennverfahren gehörenden Extraktionsverfahren war es bisher von Nachteil, daß die Böden hierfür weitgehend getrocknet und durch Mahlen aufgeschlossen werden mußten.

Bei den Extraktionsverfahren ist es ferner aus US 4,440,260 bekannt, aus Ölschlamm hoch viskose Rohölfraktionen abzutrennen. Dabei erfolgt die Reinigung ausschließlich dadurch, daß dem aufzubereitenden Material in einem ersten Schritt Lösemittel zugegeben werden, die die abzutrennenden hoch viskosen Stoffe verdünnen sollen. Erst in einem zweiten Schritt wird Wasser zugegeben, um eine Trennung durch Sedimentation zu erhalten, d. h. eine Trennung nach dem spezifischen Gewicht.

Dieses Verfahren hat bei der Aufbereitung von kontaminierten Erd-Böden, auf die die Erfindung sich bezieht, folgende Nachteile. Durch Zugabe eines Lösemittels in einem ersten Aufbereitungsschritt kommt es zu einer relativ starken Verklumpung des stets eine gewisse natürliche Feuchte besitzenden Bodens. Durch die einen klumpigen Bodenzustand bewirkende Feuchte kann sich das Lösemittel wiederum nur an der Oberfläche der feuchten Klumpen absetzen und dadurch praktisch nicht in diese bis in das Innere eindringen. Die sich so auf den einzelnen Klumpen des zu reinigenden Bodens ansammelnden Lösemittelschichten behindern sodann das erst in einem zweiten Schritt eingebrachte Wasser daran, in die Klumpen einzudringen und dadurch das kontaminierte Material optimal für die Extraktion aufzuschließen.

Hiervon ausgehend liegt der Erfindung die Aufgabe zugrunde, die für eine wirksame Extraktionsbehandlung notwendige Aufbereitung des kontaminierten Erdbodens zu verbessern. Dies ist besonders dann wichtig, wenn der Boden tonige und schluffige Anteile enthält, die besonders zum Verklumpen neigen.

Gelöst wird diese Aufgabe durch ein gattungsgemäßes Verfahren mit den kennzeichnenden Merkmalen des Anspruchs 1.

Mit Hilfe dieses erfindungsgemäßen Verfahrens lassen sich auf überraschend gute und einfache Weise die aus den Bodenmaterialien extrahierbaren organischen Schadstoffe mit einem äußerst hohen Reinigungseffekt entfernen.

Die hervorragende Wirkung des Verfahrens ist dadurch erklärbar, daß dem System zusätzlich zu dem Lösemittel Wasser zugeführt und damit das Bodenmaterial zusammen in dem Wasser und dem Lösungsmittel suspendiert und dispergiert wird. Das Extraktionsmittel hat somit eine große Reaktions-und Angriffsfläche. Ein Vorteil des Verfahrens ist, daß auch die Feinstteile des Bodens, die Schluffe und Tone wirkungsvoll gereinigt werden können. Die Wasserphase nimmt nach diesem Verfahren die löslichen, also giftigen Cyanide auf.

Vorteilhafte Ausgestaltungen des erfindungsgemäßen Verfahrens sind Gegenstand der Unteransprüche.

Für die Durchführung des Verfahrens wählt man einen Mischer, der durch seine Bauart und Umdrehungsfrequenz (Drehzahl) bei der Erstellung der Suspension aus Wasser, Boden und Lösemittel eine intensive Durchmischung der festen mit den beiden nicht ineinander löslichen flüssigen Phasen gewährleistet.

Geeignete Mischer sind bevorzugt Zwangsmischer mit variabler Drehzahl. Um den Mischer nicht zu beschädigen, müssen vorbereitende Maßnahmen ergriffen werden. Das Überkorn über 40 mm des heterogenen Bodenmaterials muß gemahlen und/oder abgesiebt werden. Hierzu stehen technisch viele geeignete Sieb- und/oder Mahlanlagen zur Verfügung.

Das erfindungsgemäße Verfahren eignet sich ganz besonders dazu, natürliche Bodenmaterialien bzw. Bodenmaterialien aus Bodenwaschanlagen zu extrahieren, deren Korndurchmesser unterhalb 2 mm liegt. Bodenanteile mit größerer Körnung können beispielsweise in Hochdruckwaschanlagen gereinigt oder auch direkt im abgetragenen Bodenbereich wieder aufgefüllt werden.

Der erste Schritt des erfindungsgemäßen Extraktionsvorganges ist, daß man das ggf. zuvor vom Überkorn abgesiebte und/oder gemahlene Bodenmaterial entsprechend seiner Feuchtigkeit mit Wasser intensiv vermischt, so daß sich Bodenmaterial zu Wasser wie etwa 1 : 1, bevorzugt 1 : 0,8 bis 1 : 2 verhalten.

Der 2. Schritt ist, daß man zur Extraktion der organischen Schadstoffe ein in Wasser nicht oder schwer lösbares Lösemittel zudosiert und das Gemisch aus Lösemittel, Wasser und Bodenmaterial durch Rühren abermals intensiv mischt.

Der Extraktionsvorgang läuft über 2 Wege ab,

a) die Direktextraktion organischer Schadstoffe vom festen Bodenmaterial selbst und

b) die Indirektextraktion des im Wasser gelösten oder suspendierten Schadstoffanteils.

Als Lösemittel verwendet man bevorzugt technische Benzinfraktionen, wie z.B. Pentan, Hexan oder Toluol. Die Dichten (spezifische Gewichte), Siedebereiche und Löslichkeiten im Wasser bei Raumtemparatur der zuvor genannten Lösemittel zeigt nachfolgende Tabelle:

| | Dichte | Siedebereich | Löslichkeit im Wasser |
|---|---|---|---|
| n - Pentan | 0,63 | 36 - 37o C | < 0,01% |
| n - Hexan | 0,66 | 68 - 69o C | 0,01% |
| Toluol | 0,87 | 110 - 111o C | o,06% |

Zweckmäßigerweise verwendet man Lösemittel mit einer Dichte unter 0,9; bevorzugt 0,8 und einem Siedebereich unter dem Kochpunkt des Wassers. Geeignet sind auch Lösemittel, die über dem Kochpunkt des Wassers liegen, sofern sie Azeotrope mit Wasser bilden

Die Menge des Lösemittels wählt man so, daß man zur Bodenmaterial/Wasser-Fraktion 2 - 20 Gew.-%, bevorzugt 5 -10 Gew.-% Lösemittel zugibt.

Beim 3. Verfahrensschritt läßt man das Gemisch aus Bodenmaterials/Wasser/Lösemittel ruhen. Nach einer entsprechenden Standzeit trennt sich die spezifisch leichteste Lösemittelschicht, die jetzt die extrahierbaren organischen Schadstoffe gelöst enthält, oben ab und wird zur weiteren Behandlung abgezogen.

Diesen Vorgang kann man im Mischer durchführen. Zweckmäßiger Weise läßt man zur Schichtentrennung den Mischerinhalt in ein geeignet geformtes Gefäß, gegebenenfalls mit einer Austragschnecke für die Bodenmaterial/Wasserschicht, ab, die, wie unten beschrieben, weiterbehandelt wird. Der Mischer wird dann für die nächste Charge frei.

Ist die Zeitdauer für das Vermischen des Bodens mit Wasser und Lösemittel kurzer als die Standzeit zur Schichtentrennung, so ist es zweckmäßig, zwei oder mehrere Gefäße mit Austragschnecke zur Schichtentrennung zu installieren.

Um eine besonders intensive Bodenmaterialwäsche zu erzielen, bei der letztlich weniger als 3% der ursprünglichen Schadstoffmenge im Bodenmaterial verbleibt, kann es erforderlich sein, den Waschvorgang nach Abtrennen der Lösemittelschicht ein zweites Mal mit frischem Lösemittel zu wiederholen. Dazu ist die Bodenmaterial/Wasser-Fraktion wieder in den Mischer zu befördern, oder man wählt eine Konstruktion, bei der zwei Mischer über- oder nebeneinander angeordnet sind. Der Extraktionsvorgang läßt sich auch kontinuierlich durchführen. Ebenso können die Temperaturen bei dieser Behandlung variiert bzw. unterschiedlich eingestellt werden. Die Anlage wird eventuell durch Absetzbehälter mit Austragsschnecke ergänzt.

Die Lösemittelfraktion, die die extrahierten organischen Schadstoffe enthält, wird nach bewährten Methoden aufgearbeitet. Nach Filtrieren und Zwischenlagern in einer Vorlage kann das Lösemittel kontinuierlich oder diskontinuierlich einer Trennvorrichtung zugespeist und das leicht siedende Lösemittel bzw. sein Azeotrop mit Wasser über Kopf abgezogen werden. Die in der Trennvorrichtung ablaufende Destillation kann unter Normaldruck oder unter hiervon abweichenden Drücken durchgeführt werden.

Nach Kondensation in einem Wärmetauscher mit Wärmerückgewinnung und Leiten über einen automatisch arbeitenden Wasserabscheider, gelangt das Lösemittel in einen Vorratstank, von wo aus es gereinigt in den Prozeß als Extraktionsmittel zurückgeführt wird. Das Azeotropwasser wird ebenfalls gesammelt und in den Prozeß zurückgeführt. Zuvor kann in einer zusätzlichen Einrichtung noch mitgeschlepptes Waschwasser abgetrennt und in den Prozeß zurückgeführt werden.

Der Sumpf der Trennvorrichtung, der aus den extrahierten organischen Schadstoffen, vermischt mit wenig Lösemittel besteht, wird abgezogen, in geeignete Transportbehälter abgefüllt und durch eine chemische oder physikalische Maßnahme entsorgt, insbesondere durch Verbrennen oder Ablagern.

Das Bodenmaterial/Wasser-Gemisch, das mit Lösemittel gemäß der Tabelle gesättigt ist, wird folgendermaßen aufgearbeitet:

Das Gemisch wird nach gängigen Methoden in Wasser und Feuchtboden getrennt. Sollte der belastete Böden auch mit Cyaniden und/oder sonstigen Cyanverbindungen kontaminiert sein, wird das abgetrennte Wasser durch einen Reinigungsreaktor geleitet, wobei die freien gelösten Cyanide in das stabile Eisenhexacyanoferrat (Berliner Blau) umgewandelt werden. Die wässrige Fraktion wird in einem Vorratstank aufgefangen und gelagert und von hier aus in den Prozeß zurückgeführt, oder in einer Wasserreinigungsanlage aufgearbeitet und dann dem Vorfluter zugeführt.

Die feuchte Bodenfraktion, der noch Lösemittelspuren anhaften, wird über ein Band geführt und dort mit Infrarotstrahlen oder Dampf soweit aufgeheizt, daß der Böden die Lösemittel-Spuren abgibt. Das Lösemittel/Wasser-Azeotrop wird in dem vorhandenen Wärmetauscher kondensiert und in einer Trennbirne (Wasserabscheider) in Lösemittel und Wasser getrennt, die dem Prozeß wieder zugeführt werden.

Durch dieses Verfahren gelingt es, Böden, die mit extrahierbaren organischen Schadstoffen kontaminiert sind, so weit zu reinigen, daß die Schadstoffe auf niedrigste Werte, teilweise bis auf Null der ursprünglichen Menge reduziert werden können

Das gesamte Extruktionsverfahren kann kontinuierlich ablaufen.

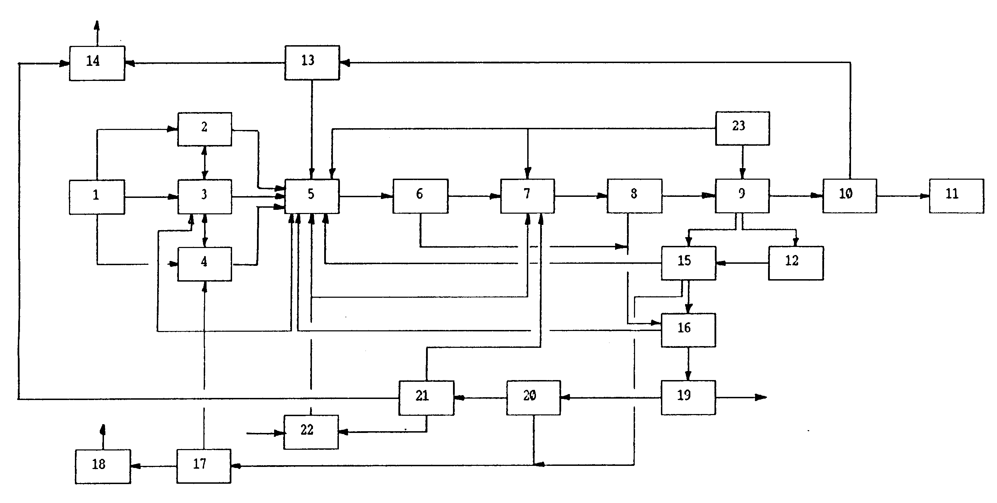

Das erfindungsgemäße Verfahren einer Böden-Reinigungsanlage ist in der Zeichnung schematisch dargestellt und wird nachfolgend im einzelnen erläutert.

Der mit Schadstoffen kontaminierte Boden 1 wird in Abhängigkeit der organischen Verunreinigungen und seiner Korngröße aufbereitet:

a) Um einen Korndurchmesser unterhalb 40 mm zu erhalten, wird der Boden in einer Mühle 2 zerkleinert und kann anschließend direkt oder über ein Sieb 3 einem Mischer 5 zugeführt werden,

b) liegt der Korndurchmesser von vornherein unter 40 mm, so kann der Boden direkt oder über das Sieb 3 dem Mischer 5 zugeführt werden,

c) ist der Boden mit Verbindungen kontaminiert, deren Siedepunkt unterhalb der im Mischer 5 zuzusetzenden Lösemittel liegt, so wird er erst zur Befreiung von diesen Verunreinigungen einer Strippanlage 4 zugeführt, um dann direkt ober über Weg a) oder b) dem Mischer 5 zugeführt zu werden.

Der abgesiebte steinige Bodenanteil kann entweder weiter zerkleinert oder anderen Reinigungsverfahren unterworfen werden.

Im Mischer 5 wird der kontaminierte Boden nacheinander mit Wasser und dann mit Lösemittel oder Lösemittelgemisch intensiv vermischt und gelangt dann in einen Sedimenter 6. Dort trennt sich die spezifisch leichtere organische Phase mit den darin gelösten Schadstoffen über der Wasser/Boden-Phase ab und wird einem Separator 16 zugeführt.

Die Wasser/Boden-Phase wird einem zweiten nachgeschalteten Mischer 7 zugeführt und mit frischem Lösemittel wie in dem ersten Mischer 5 behandelt. Nach Zuführung des neuen Wasser/Boden/Lösemittelgemisches in einen weiteren Sedimenter 8 wird wie in dem ersten Sedimenter 6 die organische Phase mit den darin gelösten Kontaminanten abgetrennt und wiederum dem Separator 16 zugeführt.

In einer Entwässerungseinrichtung 9 wird das Wasser vom Boden getrennt. Das Wasser wird einem Puffergefäß 15 direkt oder über eine Konditionierstation 12 zugeführt (siehe unten). Gegebenenfalls kann in der Entwässerungseinrichtung 9 Frischwasser aus einer Quelle 23 zum Waschen des Bodens zugeführt werden.

Der entwässerte Böden wird in einer Nachbehandlungsanlage 10 entweder mit Wasserdampf oder Stickstoff oder durch Infrarot-Erwärmung oder Mikrowellen-Trocknung von anhaftenden Lösemittelspuren befreit. Der nun dekontaminierte Boden kann von einer Entnahmestelle 11 der Wiederverwendung zugeführt werden.

Der in der Nachbehandlungsanlage 10 entstehende Lösemitteldampf wird mit Hilfe eines Kompressors und Kondensators 13 verflüssigt und kann in den Kreislauf zurückgeführt werden. Die Abluft gelangt über einen A-Kohle-Filter 14 ins Freie.

Das in der Entwasserungsanlage 9 abgetrennte Wasser wird über die Konditionieranlage 12 dem Puffergefäß 15 zugeführt, wenn zur pH-Wert-Regulierung, zur Brechung vorhandener Emulsionen, zur Entfernung löslicher Cyanide oder dergleichen eingegriffen werden muß. Anderenfalls gelangt es unter Umgehung der Konditionieranlage 12 aus der Entwässerungsanlage 9 in das Puffergefäß 15.

Das im Puffergefäß 15 befindliche Wasser kann roh im Mischer 5 eingesetzt werden oder über einen Tank 17 und eine Wasserreinigunganlage 18 dem Vorfluter zugeleitet werden. Weiterhin verfügt der Tank 17 über Leitungen zu dem Sieb 3, der Strippanlage 4 und dem Mischer 5.

Sollte sich im Puffer 15 eine organische Phase oben abtrennen, so wird diese dem Separator 15 zugeführt, wo bereits die aus den Sedimenten 6 und 8 abgezogenen Lösemittel sind. Für weitere Extraktionen kann das Lösemittel aus dem Separator 16 dem Mischer 5 zugeführt werden.

Bei hoher Schadstoff-Belastung des Lösemittels in dem Separator 16 wird es beispielsweise in einem Dünnschichtverdampfer 19 rektifiziert. Der Destillationsrückstand, bestehend aus wenig Lösemitteln und den organischen Schadstoffen, wird beispielsweise durch Verbrennung oder Ablagerung entsorgt.

Der Lösemitteldampf aus dem Verdampfer 19 speist eine Trennvorrichtung 20 und wird hier in Wasser und reinen Lösemitteldampf zerlegt. Die Wasser-Phase gelangt in den Tank 17.

Der reine Lösemitteldampf kondensiert in einem Kondensator 21 und wird in einem Lösemittelbehälter 22 gespeichert, der ebenfalls als Tanklager für reines Lösemittel dient und die Mischer 5 und 7 speist.

Die Abluft aus dem Kondensator 21 gelangt über den A-Kohle-Filter 14 ins Freie.

Frischwasser wird dem Prozeß in den Mischern 5 und 7 sowie in der Entwässerungsanlage 9 aus einer Quelle 23 zugeleitet.

Enthält das zu reinigende Bodenmaterial mittlere oder höhere Anteile an Kohle oder Huminstoffen, so muß mit einer reduzierten Extraktionsausbeute gerechnet werden.

Die Schritte Mischer/Separator 5,6 bzw. 7,8 können zur Steigerung der Extraktionsausbeute beliebig wiederholt werden.

Ausführungsbeispiel mit konkreten Werten:

3717 g Lehmboden mit einem Wassergehalt von 20.9%, d.h. 2940 g Trockensubstanz, der mit den in der nachfolgenden Tabelle angegebenen organischen Verbindungen kontaminiert war, wurde mit 5000 ml Wasser in drei Extraktionsstufen (jeweils bestehend aus einem Mischer und einem nachgeschalteten Separator mit jeweils 1000 ml n-Hexan der erfindungsgemäßen Extraktion unterworfen. Die in dieser Tabelle aufgelisteten Daten geben die Menge der jeweiligen organischen Verbindungen im kontaminierten Boden (Kontaminate) und die Restmenge in mg nach dem ersten, zweiten und dritten Extraktionsschritt und die jeweilige Gesamt-Extraktionsausbeute in % an.

T a b e l l e

| Kontamination | in mg | nach 1.Extra. | | nach 2.Extra. | | nach 3.Extra. | |
|---|---|---|---|---|---|---|---|
| | | mg | % | mg | % | mg | % |
| 1. Benzol | 87 | 4.0 | 95.4 | 3.5 | 96.0 | – | |
| 2. Toluol | 87 | 3.0 | 96.6 | 2.8 | 96.8 | – | |
| 3. Ethylbenzol | 87 | 2.0 | 97.7 | 1.9 | 97.8 | – | |
| 4. m-, p-Xylol | 87 | 2.0 | 97.7 | 1.9 | 97.8 | – | |
| 5. O-Xylol | 87 | 2.0 | 97.7 | 1.9 | 97.8 | – | |
| 6. Trichlorethen | 15 | 1.2 | 92.0 | 0.025 | 99.8 | 0.010 | 99.9 |
| 7. Tetrachlorethen | 15 | 0.20 | 98.7 | 0.009 | 99.9 | 0.003 | 100 |
| 8. Phenol | 104 | 103.9 | 0.1 | 103.3 | 0.7 | 103.0 | 1.0 |
| 9. 2,4-Dimethylphenol | 69 | 58.7 | 14.9 | 49.4 | 28.4 | 46.0 | 33.3 |
| 10. 2,6-Dimethylphenol | 143 | 117.3 | 18.0 | 99.3 | 30.6 | 87.2 | 39.0 |
| 11. 1,3,5-Trichlorbenzol | 104 | 25.0 | 76.0 | 0 | 100 | – | |
| 12. 1,2,4-Trichlorbenzol | 145 | 29.0 | 80.0 | 0 | 100 | – | |
| 13. gamma-HCH | 114 | 41.0 | 64.0 | 11.2 | 90.2 | 3.7 | 96.8 |
| 14. 1-Chlornaphthol | 240 | 80.0 | 66.7 | 13.5 | 94.4 | 0 | 100 |
| 15. 1,4-Naphtochinon | 140 | 91.0 | 35.0 | 50.1 | 64.2 | 14.0 | 90.0 |
| 16. Anthracen | 100 | 67.0 | 33.0 | 51.3 | 48.7 | 43.7 | 56.3 |
| 17. Acenaphthen | 100 | 43.0 | 57.0 | 21.6 | 78.4 | 12.6 | 87.4 |
| 18. Acenaphthylen | 100 | 91.9 | 8.1 | 86.3 | 13.7 | 82.2 | 17.8 |
| 19. Chrysen | 100 | 50.8 | 49.2 | 21.4 | 78.6 | 0 | 100 |
| 20. Fluoranthen | 100 | 63.5 | 36.5 | 39.4 | 60.6 | 29.1 | 70.9 |

## Patentansprüche

1. Verfahren zur Reinigung von Erd-Böden, Sedimenten oder erdbodenähnlichen Materialien wie Bauschutt (allgemein: Bodenmaterialien), die mit extrahierbaren organischen Schadstoffen belastet sind und nach Aufbereitung auf eine Körnung kleiner oder gleich 40 mm unter Zugabe von Wasser und einem in Wasser nicht oder schwer lösbaren Lösemittel oder Lösemittelgemisch mit einer Dichte kleiner 1 zu einer Suspension verarbeitet werden, in der das mit den Schadstoffen beladene Lösemittel durch seine gegenüber dem Bodenmaterial/Wasser-Gemisch geringere Dichte nach einer Standzeit zum Aufschwemmen über das Bodenmaterial/Wasser-Gemisch gebracht wird und bei dem danach das schadstoffenthaltende Lösemittel

EP 0 327 896 B1

einerseits und der Bodenmaterial/Wasser-Anteil andererseits voneinander getrennt werden, **dadurch gekennzeichnet ,**
daß bei der Erzeugung der Suspension aus Bodenmaterial, Wasser und Lösemittel das Bodenmaterial in einem ersten Schritt mit Wasser und zusammen mit diesem erst in einem zweiten nachfolgenden Schritt mit Lösemittel vermischt wird, wobei in der Suspension das Wasser mit einem Anteil von 80 - 200 Gew.-% bezogen auf die Bodenmaterial-Trockensubstanz und das Lösemittel mit einem Anteil von 2 - 20 Gew.-% bezogen auf das Gemisch aus Bodenmaterial und Wasser vorliegen.

2. Verfahren nach Anspruch 1, **dadurch gekennzeichnet,**
daß danach nur Bodenmaterial mit einer Körnung unterhalb 2 mm behandelt wird.

3. Verfahren nach Anspruch 1 oder 2 für Bodenmaterialien mit freisetzbaren Cyaniden, **dadurch gekennzeichnet,**
daß das aus der Suspension stammende von dem Bodenmaterial entfernte Wasser zur Entfernung der freisetzbaren Cyanide über bekannte Reinigungserde geleitet wird, wodurch die betreffenden Cyanide in Berliner Blau überführt werden.

4. Verfahren nach einem der vorhergehenden Ansprüche, gekennzeichnet durch folgende Merkmale:
a) der durch Mahlen und/oder Sieben vorbehandelte Boden wird mit einem etwa gleich großen Volumen Wasser intensiv vermischt,
b) es wird ein organisches Lösemittel oder Lösemittelgemisch mit einer Dichte unter 1, in einer Menge von 2 bis 20 Gewichts-% der Gesamtmenge zugegeben und die Suspension abermals intensiv gemischt,
c) das Gemisch erhält zur Auftrennung in die einzelnen Phasen (mit Schadstoffen beladenes Lösemittel einerseits und Bodenmaterial/Wasser andererseits) eine Ruhezeit,
d) das Lösemittel mit dem extrahierten organischen Stoffen wird abgezogen,
e) der hiernach verbleibende Teil der Suspension wird in Wasser und Boden getrennt, die je für sich von Lösemittelrückständen auf physikalischem wege befreit werden können,
f) das mit den organischen Stoffen verunreinigte Lösemittel wird redestilliert,
g) der danach verbleibende Sumpf (Destillationsrückstand) wird entsorgt.

5. Verfahren nach einem der vorhergehenden Ansprüche, **dadurch gekennzeichnet,**
daß die Dichte des Lösemittels unter 0,9, bevorzugt unter 0,8 liegt.

6. Verfahren nach einem der vorhergehenden Ansprüche, **dadurch gekennzeichnet,**
daß das Lösemittel einen Siedepunkt unter 120° C, bevorzugt unter 80° C hat.

7. Verfahren nach einem der Ansprüche, 4 bis 6, **dadurch gekennzeichnet,**
daß das redestillierte Lösemittel für einen erneuten Reinigungsvorgang nach einem der vorstehenden Ansprüche wieder verwendet wird.

8. Verfahren nach einem der Ansprüche, 4 bis 7, **dadurch gekennzeichnet,**
daß der verbliebene Sumpf durch eine chemische oder physikalische Maßnahme entsorgt wird, insbesondere durch Verbrennen oder Ablagern.

9. Verfahren nach einem der Ansprüche 4 bis 8 **dadurch gekennzeichnet,**
daß das abgetrennte Wasser für einen erneuten Reinigungsvorgang nach einem der vorstehenden Ansprüche wieder verwendet wird.

## Claims

1. A method of cleaning soil, sedimentation or earth-like materials such as building debris (generally: earth materials), which are charged with extractable organic pollutants and which, after processing, can be reduced to a granulation of less than or equal to 40 mm with the addition of water and a solvent or mixture of solvents which do not or which are not readily soluble in water and having a density of less than 1 to produce a suspension in which the solvent charged with the pollutants is, by virtue of the fact that its density is less than that of the earth material/water mixture and, after a standing time, is caused to float on top of the earth material/water/mixture and wherein subsequently the pollutant-bearing solvent on the one hand and the earth material/water fraction on the other are separated from each other, characterised in that
when the suspension of earth material, water and solvent is produced, the earth material is in a first stage blended with water and, together therewith, and only in a second and subsequent stage is it blended with the solvent, the suspension containing the water in a proportion of 40 to 200% by weight in relation to the dry earth material while the solvent is present therein in a proportion of 2 to 20% by weight in relation to the mixture of earth, material and water

2. A method according to Claim 1, characterised in that
subsequently only earth material with a granulation of less than 2 mm is treated.

7

3. A method according to Claim 1 or 2 for earth materials with releasable cyanides, characterised in that the water emanating from the suspension and removed from the earth material is, in order to remove the releasable cyanides, passed through known cleaning earth, so that the relevant cyanides are converted to Berlin blue.

4. A method according to one of the preceding Claims, characterised by the following features:

a) the earth pre-treated by grinding and/or salving is blended intensively with substantially the same volume of water,

b) an organic solvent or mixture of solvents with a density of less than and in a quantity of 2 to 20% by weight in relation to the total quantity is added and the suspension is then intensively and repeatedly mixed,

c) the mixture is left to stand for a time in order that the individual phases (pollutant-charged solvent on the one hand and earth material/water on the other) can become separated,

d) the solvent with the extracted organic substances is extracted,

e) the remaining part of the suspension is separated into water and earth which can then be independently and physically cleansed to remove solvent residues,

f) the solvent contaminated by the organic substances is redistilled,

g) the subsequently remaining bottom (distillation residue) is removed.

5. A method according to one of the preceding Claims, characterised in that the density of the solvent is less than 0.9 and is preferably less than 0.8.

6. A method according to one of the preceding Claims, characterised in that the solvent has a boiling point of less than 120°C and preferably less than 80°C.

7. A method according to one of Claims 4 to 6, characterised in that the redistilled solvent is used for a fresh cleansing process according to one of the preceding Claims.

8. A method according to one of Claims 4 to 7, characterised in that the remaining bottom is removed by a chemical or physical measure, particularly by combustion or deposition.

9. A method according to one of Claims 4 to 8, characterised in that the separated water is used for a fresh cleansing process according to one of the preceding Claims.

**Revendications**

1. Procédé de dépollution de terres, de sédiments ou de matériaux terreux tels que des gravois (généralement appelés terres) qui sont contaminés par des polluants organiques extractibles et transformés, après un traitement destiné à obtenir une granulation inférieure ou égale à 40 mm, et avec addition d'eau et d'un solvant ou mélange de solvants insoluble ou difficilement soluble dans l'eau avec une densité inférieure à 1, en une suspension dans laquelle le solvant chargé de polluants est amené, du fait de sa densité plus faible par rapport au mélange de terre/eau, à monter au bout d'un temps de repos au-dessus du mélange de terre/eau et dans laquelle le solvant contenant les polluants d'une part et la fraction de terre/eau d'autre part sont ensuite séparés l'un de l'autre, **caractérisé en ce** que

lors de la préparation de la suspension de terre, d'eau et de solvant, la terre est mélangée en une première étape avec de l'eau, puis, dans une seconde étape, conjointement avec celle-ci avec du solvant, dans la suspension, l'eau représentant une part de 80 à 200 % en poids rapportés à la substance sèche de la terre, et le solvant une part de 2 à 20 % en poids rapportés au mélange de terre et d'eau.

2. Procédé selon la revendication 1, caractérisé en ce que seul est traité un matériau terreux présentant une granulation inférieure à 2 mm.

3. Procédé selon l'une des revendications 1 ou 2 pour des matériaux terreux avec des cyanures pouvant être libérés, caractérisé en ce que, pour l'élimination des cyanures libérables, l'eau provenant de la suspension et éliminée du matériau terreux est amenée sur de la terre d'épuration, ce qui a pour effet de transformer les cyanures considérés en bleu de Berlin.

4. Procédé selon l'une des revendications précédentes, caractérisé en ce qu'il présente les particularités suivantes :

a) la terre préparée par broyage et/ou tamisage est mélangée intensivement avec un volume d'eau sensiblement égal,

b) un solvant organique ou un mélange de solvants d'une densité inférieure à 1 est ajouté dans une proportion de 2 à 20 % en poids de la quantité totale, et la suspension est à nouveau brassée intensivement,

c) pour la séparation en ses différentes phases (solvant chargé de polluants d'une part et terre/eau d'autre part), le mélange est laissé au repos pendant un certain temps,

d) le solvant avec les substances organiques extraites est soutiré,

e) la partie restante de la suspension est séparée en eau et en terre, les deux phases pouvant être libérées séparément des résidus de solvant par voie physique,

f) le solvant contaminé par des substances organiques est redistillé,

g) le fond résiduel (résidu de distillation) est éliminé.

5. Procédé selon l'une des revendications précédentes, caractérisé en ce que la densité du solvant est inférieure à 0,9, de préférence inférieure à 0,8.

6. Procédé selon l'une des revendications précédentes, caractérisé en ce que le solvant a un point d'ébullition inférieur à 120°C, de préférence inférieur à 80°C.

7. Procédé selon l'une des revendications 4 à 6, caractérisé en ce que le solvant redistillé est réutilisé pour une nouvelle épuration selon l'une des revendications précédentes.

8. Procédé selon l'une des revendications 4 à 7, caractérisé en ce que le fond résiduel est éliminé par une me sure chimique ou physique, en particulier par incinération ou stockage.

9. Procédé selon l'une des revendications 4 à 8, caractérisé en ce que l'eau séparée est réutilisée pour une nouvelle épuration selon l'une des revendications précédentes.